**Europäisches Patentamt**

**European Patent Office**

**Office européen des brevets**

(11) Veröffentlichungsnummer: **0 152 815**
**B1**

(12) **EUROPÄISCHE PATENTSCHRIFT**

(45) Veröffentlichungstag der Patentschrift:
**07.10.87**

(51) Int. Cl.⁴: **F 16 D 65/54**

(21) Anmeldenummer: **85100849.0**

(22) Anmeldetag: **28.01.85**

(54) **Selbsttätige Nachstellvorrichtung für Bremszylinder von Fahrzeugbremsen.**

(30) Priorität: **03.02.84 DE 3403808**

(43) Veröffentlichungstag der Anmeldung:
**28.08.85 Patentblatt 85/35**

(45) Bekanntmachung des Hinweises auf die Patenterteilung:
**07.10.87 Patentblatt 87/41**

(84) Benannte Vertragsstaaten:
**DE FR IT SE**

(56) Entgegenhaltungen:
**DE - A - 2 708 690**
**DE - C - 754 019**
**DE - G - 916 153**
**FR - A - 1 350 690**
**FR - A - 2 126 589**
**US - A - 3 559 771**

(73) Patentinhaber: **KNORR-BREMSE AG, Moosacher
Strasse 80 Postfach 401060, D-8000 München 40 (DE)**

(72) Erfinder: **Bieker, Dieter, Fichtenstrasse 86,
D-5630 Remscheid (DE)**
Erfinder: **Stein, Werner, Birkenstrasse 4,
D-5630 Remscheid (DE)**

**Beschreibung**

Die Erfindung betrifft eine selbsttätige, stufenlos wirkende Nachstellvorrichtung für hydraulische Bremszylinder von insbesondere als Scheibenbremsen ausgebildeten Fahrzeugbremsen, mit einem in einem Zylindergehäuse bewegbaren Kolben, der im Hydraulikraum eine zum Zylindergehäuse offene Ringnut aufweist, in welcher sich ein Reibring befindet, der in der Ringnut zumindest annähernd reibschlussfrei um einen Sollhub und relativ zum Zylindergehäuse in einem Nachstellbereich reibschlüssig axialverschieblich ist.

Eine derartige Nachstellvorrichtung mit im Hydraulikraum befindlicher Ringnut ist beispielsweise aus der DE-C-754 019 bekannt. In die Ringnut greift dabei ausschliesslich der Reibring ein, der einen Reibschluss zum Zylindergehäuse zumindest bei teilweise verschlissenen Fahrzeugbremsen an Zylinderwandabschnitten findet, welche auch der abgedichteten Führung des Kolbens im Zylindergehäuse dienen; diese Wandabschnitte können hierdurch derart beschädigt werden, dass sie zur dichten Führung des Kolbens nicht mehr geeignet sind.

Die FR-A-1 350 690 und 2 126 589 sowie die DE-A-2 708 690 zeigen ebenfalls den eingangs genannten Merkmalen entsprechende Nachstellvorrichtungen, bei welchen jedoch zum Vermeiden des vorstehend erwähnten Mangels, also zum Erreichen einer guten, in ihrer Dichtheit von der Nachstellvorrichtung nicht beeinträchtigbaren Kolbenführung, der Reibring mit einem Wandungsabschnitt des Zylindergehäuses zusammenwirkt, der im ganzen Nachstellbereich axial oder radial zum der hydraulikdichten Führung des Kolbens dienenden Wandungsabschnitt versetzt angeordnet ist.

Bei allen diesen bekannten Nachstellvorrichtungen ist die eine, axiale Begrenzungswand der Ringnut zum Aufschieben des Reibringes abnehmbar ausgebildet und der Sollhub ist durch die axialen Längen von Ringnut und Reibring bestimmt.

Aus der FR-A-1 350 690 sowie der DE-A-2 126 589 ist es weiterhin bekannt, zwischen den Kolben und den Reibring eine Feder einzuspannen.

Es ist Aufgabe der Erfindung, eine Nachstellvorrichtung der eingangs genannten Art derart auszubilden, dass der Sollhub in einfacher Weise den jeweiligen Erfordernissen entsprechend einstellbar ist. Zudem soll die Nachstellvorrichtung die Möglichkeit bieten, sie derart auszugestalten, dass wahlweise die Nachstellvorrichtung keinerlei elastische Spannkräfte auf den Kolben ausübt, dass der Kolben eine in Bremslöserichtung wirkende, elastische Vorspannung erfährt, oder dass im Lösezustand der Bremsen der Kolben ein elastisches, schwaches Angelegthalten der Bremsen bewirkt, wobei der Bremszylinder mit nur geringem Aufwand bausteinartig den jeweiligen Erfordernissen anpassbar ist.

Diese Aufgabe wird nach der Erfindung dadurch gelöst, dass zwischen den Reibring und einer der beiden axialen Begrenzungswände der Ringnut ein zumindest annähernd reibschlussfrei axialbeweglicher Zwischenring angeordnet ist, der bei Anlage des Reibringes an der dem Zwischenring abgewandten Begrenzungswand der Ringnut ein dem Sollhub entsprechendes Axialspiel aufweist, und dass der Zwischenring sich in einer Innenringnut des Reibringes befindet, die zu einer der Stirnseiten des Reibringes und nach radial innen offen ist und deren Durchmesser grösser ist als der Aussendurchmesser der Begrenzungswände der Ringnut. Durch Einsetzen von Zwischenringen geeigneter Stärke ist hierbei der Sollhub entsprechend den jeweiligen Erfordernissen festlegbar.

Die Unteransprüche geben nach der weiteren Erfindung vorteilhafte Ausgestaltungsmöglichkeiten zum Anpassen der Nachstellvorrichtung an die jeweiligen Erfordernisse an. Die Merkmale des Unteranspruches 3 dienen dabei dem Lösen der Unteraufgabe, eine gute Kolbenführung im Zylindergehäuse zu erreichen, wobei die Nachstellvorrichtung die hydraulikdichte Kolbenführung nicht beeinträchtigen soll.

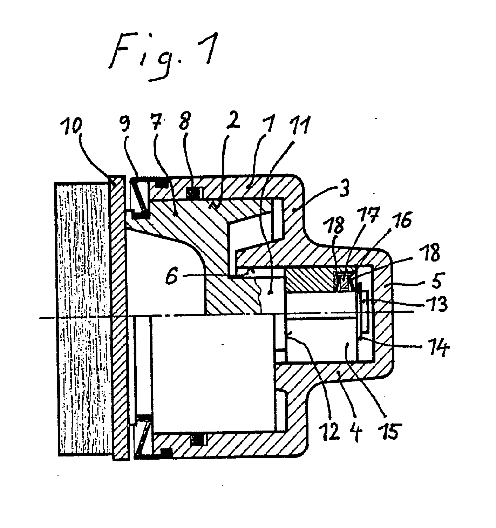

In der Zeichnung Fig. 1 bis Fig. 3 sind drei unterschiedlich ausgebildete Nachstellvorrichtungen als Ausführungsbeispiele für die Erfindung dargestellt, wobei sich gleiche Bezugszeichen auf jeweils gleiche Teile beziehen.

Die Fig. 1, 2 und 3 zeigen ein Zylindergehäuse 1 mit einer Kolbenlauffläche 2, welche sich vom offenen Ende des Zylindergehäuses 1 bis zu einem Bodenabschnitt 3 erstreckt. Der Bodenabschnitt 3 weist zentrisch einen Zylinderabsatz 4 mit kleinerem Durchmesser als die Kolbenlauffläche 2 auf, der Zylinderansatz 4 erstreckt sich einerseits axial etwas in den von der Zylinderlauffläche 2 umschlossenen Innenraum des Zylindergehäuses 1 und andererseits nach aussen, wo er durch einen Boden 5 verschlossen ist. Im Zylinderansatz 5 befindet sich ein innenzylindrischer Wandungsabschnitt 6. Im Zylindergehäuse 1 befindet sich ein Kolben 7, der mittels eines Dichtringes 8 abgedichtet verschieblich an der Kolbenlauffläche 2 geführt ist und der seitens des offenen Zylindergehäuse-Endes mittels eines faltenbalgähnlichen Ringes 9 verschmutzungsdicht verschieblich mit dem Zylindergehäuse 1 verbunden ist und mit einer Bremsbacke 10 in einer weiteren nicht dargestellten Scheibenbremse zusammenwirkt. Andererseits trägt der Kolben 7 einen teilweise in den Zylinderabsatz 4 hineinragenden Ansatz 11, an welchen sich unter Bildung einer Schulter 12 ein verjüngter, zylindrischer Ansatz 13 anschliesst. Der Ansatz 13 trägt nahe seines freien, dem Boden 5 zugewandten Endes einen radial auskragenden Sicherungsring 14; der Kolben 7 ist so mit einer Ringnut versehen, deren seitliche Begrenzungswände durch die Schulter 12 und dem Sicherungsring 14 gebildet werden, wobei die vom Sicherungsring 14 gebildete Begrenzungswand lösbar ist. Zwischen der Schulter 12 und dem Sicherungsring 14 befindet sich ein auf dem Ansatz 13 mit Schiebesitz gelagerter, gegebenenfalls aufgeschnittener bzw. mehrteiliger Reibring 15, dessen Aussenumfang mit elastischer Vorspannung am Wandungsabschnitt 6 anliegt, so dass der Reibring 15 Reibschluss zum Zylindergehäuse 1 aufweist und nur unter Überwindung von Reibung gegen dieses verschieblich ist. Der Reibring 15 weist an seinem einen, axialen Ende eine Innenringnut 16 auf, welche zu seiner Stirnseite und nach radial innen offen ist. Der Durchmesser der Innenringnut 16 ist grösser als der Durchmesser des Ansatzes 11 und des Sicherungsringes 14. In der Innenringnut 16 befindet sich ein Zwischenring 17.

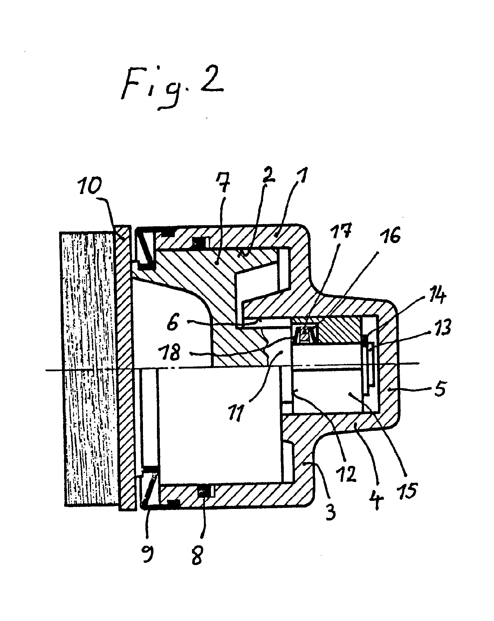

Nach Fig. 1 und Fig. 2 besteht der Zwischenring 17 aus einem schmalen Ringkörper, an welchen sich beiderseits je eine Tellerfeder 18 anschliesst, wobei die Tellerfedern 18 sich nach radial innen vom Zwischenring 17 abspreizen.

Bei der Ausführung nach Fig. 1 befindet sich die Innenringnut 16 auf der dem Sicherungsring 14 zugewandten Seite des Reibringes 15, die Tellerfedern 18 stützen sich dabei einerseits gegen den Reibring 15 und andererseits gegen den Sicherungsring 14 mit axialer Vorspannung ab. Andererseits liegt der Reibring 15 an der Schulter 12 an. Hieraus ergibt sich, dass, wird der Kolben 7 seitens des Bodenabschnittes 3 über einen nicht dargestellten Bremsleitungsanschluss druckmittelbeaufschlagt, er zum Zuspannen der Bremse relativ zum Zylindergehäuse 1 nach links verschoben wird, wobei der Reibring 15 infolge seines Reibschlusses zum Zylindergehäuse 1 ortsfest verbleibt und der Verschiebehub durch elastische Verformung der Tellerfedern 18 aufgenommen wird. Der auf diese Weise mögliche, maximale Hub ist erreicht, wenn die Tellerfedern 18 plan am Zwischenring 17 anliegen; dieser Hub entspricht dem zum maximalen Zuspannen der Bremse üblicherweise erforderlichen Hub. Ist durch vorangehenden Bremsbelagverschleiss der Hub grösser, wird anschliessend vom Kolben 7 über den Sicherungsring 14 der Reibring 15 mitgenommen, wodurch der überschüssige Hubanteil nachgestellt wird. Wird zum nachfolgenden Bremsenlösen die Druckmittelbeaufschlagung des Kolbens 7 abgebaut, so bewirken die sich entspannenden Tellerfedern 18 eine Zurückbewegung des Kolbens 7 relativ zum unter seinem Reibschluss ortsfest verbleibenden Reibring 15, bis die zuvor vom Reibring 15 abgehobene Schulter 12 wieder am Reibring 15 anliegt; diese Rückbewegung des Kolbens 7 bewirkt ein Bremsenlösen um einen Sollhub. Bei der Ausführungsform nach Fig. 1 ist also die Bremse im Lösezustand stets um einen bestimmten Sollhub gelöst, d.h., die Bremsbacke 10 steht der nicht dargestellten Bremsscheibe mit einem bestimmten, geringen Abstand gegenüber.

Bei der Ausführung nach Fig. 2 befindet sich die Innenringnut 16 auf der der Schulter 12 zugewandten Seite des Reibringes 15, andererseits steht der Reibring 15 dem Sicherungsring 14 mit einem sehr geringen, dem elastischen Verformungshub der Bremse beim Bremszuspannen entsprechenden Abstand gegenüber. Im Lösezustand der Bremse liegt die Bremsbacke 10 an der nicht dargestellten Bremsscheibe mit geringer, durch die Tellerfedern 18 bewirkter Vorspannung an, so dass keine Fremdkörper zwischen Bremsscheibe und Bremsbacke 10 eindringen können. Das «Schleifen» der Bremse im Lösezustand ist dabei jedoch so gering, dass es keine nennenswerte Bremswirkung bewirkt und auch auf den Bremsenverschleiss ohne merkliche Einflüsse bleibt. Derartige Bremsen werden insbesondere bei Baustellenfahrzeugen benutzt, welche besonderer Verschmutzung ausgesetzt sind.

Wird bei der Ausführung nach Fig. 2 der Kolben 7 zum Bremsen druckmittelbeaufschlagt, so verschiebt er sich höchstens um einen sehr geringen Betrag zum festen Zuspannen der Bremse relativ zum Zylindergehäuse 1 nach links, wobei der Sicherungsring 14 während üblichen Bremsvorgängen maximal bis zur Anlage am ortsfest verbleibenden Reibring 15 gelangt. Der geringe Hub ist dabei durch die bereits erwähnte, elastische Verformung der Bremse unter den Bremszuspannkräften bestimmt. Ist durch vorangehenden Bremsverschleiss der Hub des Kolbens 7 relativ zum Zylindergehäuse 1 jedoch vergrössert, so wird nach Anlage des Sicherungsringes 14 am Reibring 15 letzterer entgegen seinem Reibschluss vom Kolben 15 um einen den überschüssigen Hubwegbetrag entsprechenden Verschiebeweg mitgenommen. Wird zum nachfolgenden Bremsenlösen die Druckmittelbeaufschlagung des Kolbens 7 abgebaut, so wird der Kolben 7 von der sich elastisch zurückverformenden Bremse nach rechts um einen geringen Rückweg zurückgedrückt, wobei der Reibring 15 in seiner Lage verbleibt. Nach elastischer Entspannung der Bremse verbleibt die Bremsbacke 10 wie eingangs beschrieben unter der Vorspannung der Tellerfedern 18 an der Bremsscheibe 10 anliegend.

Bei den Ausführungen nach Fig. 1 und Fig. 2 können die Tellerfedern 18 an ihrem Aussenumfang am Zwischenring 17 befestigt sein. Bei der Ausführung nach Fig. 1 bestimmt die Breite des Zwischenringes 17 in Verbindung mit der Breite der Tellerfedern 18 die Grösse des Sollhubes, durch Auswechseln des Zwischenringes 17 gegen Zwischenringe anderer axialer Breite kann die Grösse des Sollhubes den jeweiligen Erfordernissen angepasst werden. Falls die Tellerfedern 18 mit dem Zwischenring 17 verbunden sind, ist die Montage bzw. das Auswechseln der so gebildeten, insgesamt als Zwischenring dienenden Baueinheiten besonders einfach. Bei der Montage ist je nachdem, ob eine Ausführungsform nach Fig. 1 oder Fig. 2 montiert werden soll, bei abgenommenem Sicherungsring 14 auf den Ansatz 13 zuerst der Reibring 15 und der Zwischenring mit den Tellerfedern 18 aufzuschieben und durch Einsetzen des Sicherungsringes 14 zu sichern, oder es ist zuerst der Zwischenring 17 mit den Tellerfedern 18 und sodann der Reibring 15 auf den Ansatz 13 aufzuschieben und durch Einsetzen des Sicherungsringes 14 zu halten; es ist dabei lediglich darauf zu achten, dass in ersterem Fall die Innenringnut 16 dem freien Ende des Ansatzes 13 zu- und in zweiterem Falle abgewandt ist. Es ist offensichtlich, dass durch entsprechendes Umkehren des Reibringes 15 auch die Ausführungsformen nach Fig. 1 und 2 ohne weiteres ineinander überführbar sind, beide Ausführungsformen sind also unter Benutzung gleicher Bauteile herstellbar.

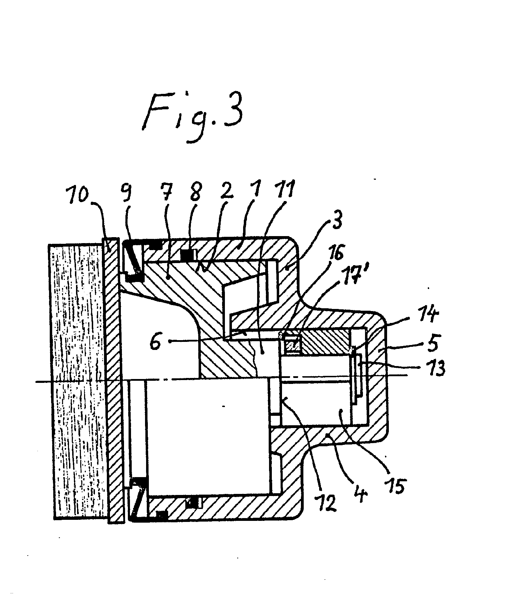

Bei der Ausführungsform nach Fig. 3 befindet sich in der Innenringnut ein tellerfederfreier Zwischenring 17', dessen axiale Breite derart bemessen ist, dass er in der Innenringnut 16 maximal ein dem Sollhub der Bremse entsprechendes Axialspiel aufweist. Bei der Ausführungsform nach Fig. 3 befindet sich die Innenringnut 16 nahe der Schulter 12, es ist jedoch auch möglich, dass bei um 180° um eine Querachse gedrehtem Reibring 15 die Innenringnut 16 sich sicherungsseitig befindet. Bei der Ausführungsform nach Fig. 3 nimmt im Lösezustand der Bremse der Kolben 7 eine unbestimmte Lage in einem Hubbereich ein, welcher von kraftlos an der Bremsscheibe anliegender Bremsbacke entsprechender Stellung bis um den Sollhub von der Bremsscheibe abgehobener Lage entsprechender Stellung reicht. Wird zum Bremsen der Kolben 7 druckmittelbeaufschlagt, so spannt er unter entsprechender Verschiebung relativ zum Zylindergehäuse 1 die Bremse zu, wobei während normalen Bremsungen ohne Nachstellvorgang der Reibring 15 in Ruhe verbleibt. Nur bei übermässigen, durch vorangehenden Verschleiss bedingten Bremszuspannhüben nimmt der Kolben 7 über den Sicherungsring 14 den Reibring 15 unmittelbar oder, bei umgekehrter Anordnung, vermittels des Zwischenringes 17' um einen dem Überhub entsprechenden Betrag entgegen seinem Reibschluss mit. Beim nachfolgenden Lösen wird der Kolben 7 um zumindest den elastischen Entspannungshub der Bremse zurückgedrückt, er kann sich infolge sonstiger, auf ihn einwirkender Rückdruckkräfte jedoch auch bis maximal einem dem Sollhub entsprechenden Hubweg zurückbewegen, wobei jedoch der Reibring 15 jedenfalls in Ruhe verbleibt. Der maximale Rückhub des Kolbens 7 ist durch Anlage der Schulter 12 am andererseits am Reibring 15 anliegenden Zwischenring 17' oder, bei umgekehrtem Reibring 15, durch unmittelbare Anlage der Schulter 12 am Reibring bestimmt.

Durch Austausch des Zwischenringes 17' gegen Zwischenringe anderer axialer Breite ist bei der Ausführungsform nach Fig. 3 der Sollhub veränderbar, so dass der Sollhub den jeweiligen Erfordernissen angepasst werden kann. Zudem ist offensichtlich, dass lediglich durch Einsetzen entsprechender Zwischenringe 17 mit Tellerfedern 18 oder tellerfederfreier Zwischenringe 17' in die Innenringnut 16 wahlweise Ausführungsformen nach Fig. 1, 2 oder 3 herstellbar bzw. ineinander überführbar sind.

Bei allen Ausführungsformen ist wesentlich, dass sich der Zylinderansatz 4 teilweise in den Raum radial innerhalb der Kolbenlauffläche 2 erstreckt, wodurch trotz grossem möglichen Verschiebeweg für den Reibring 15 und damit grossem, möglichem Nachstellbereich die axiale Baulänge gering gehalten wird. Dabei gewährt der sich am Zylindergehäuse 1 haltende Reibring 15 dem Ansatz 13 des Kolbens 17 eine axiale Führung, die axial ausserhalb der Führung des Kolbens 7 an der Kolbenlauffläche 2 liegt, der Kolben 7 erhält hierdurch bei kurzer Baulänge eine grosse, günstige und Verklemmungen entgegenwirkende Führungslänge.

## Patentansprüche

1. Selbsttätige, stufenlos wirkende Nachstellvorrichtung für hydraulische Bremszylinder von insbesondere als Scheibenbremsen ausgebildeten Fahrzeugbremsen, mit einem in einem Zylindergehäuse (1) bewegbaren Kolben (7), der im Hydraulikraum eine zum Zylindergehäuse (1) offene Ringnut aufweist, in welcher sich ein Reibring (15) befindet, der in der Ringnut zumindest annähernd reibschlussfrei um einen Sollhub und relativ zum Zylindergehäuse (1) in einem Nachstellbereich reibschlüssig axialverschieblich ist, dadurch gekennzeichnet, dass zwischen dem Reibring (15) und einer der beiden axialen Begrenzungswände (Schulter 12 bzw. Sicherungsring 14) der Ringnut ein zumindest annähernd reibschlussfrei axialbeweglicher Zwischenring (17, 17') angeordnet ist, der bei Anlage des Reibringes (15) an der dem Zwischenring (17, 17') abgewandten Begrenzungswand (Schulter 12 bzw. Sicherungsring 14) der Ringnut ein dem Sollhub entsprechendes Axialspiel aufweist, und dass der Zwischenring (17, 17') sich in einer Innenringnut (16) des Reibringes (15) befindet, die zu einer der Stirnseiten des Reibringes (15) und nach radial innen offen ist und deren Durchmesser grösser ist als der Aussendurchmesser der Begrenzungswände (Schulter 12 bzw. Sicherungsring 14) der Ringnut.

2. Nachstellvorrichtung nach Anspruch 1, wobei eine der axialen Begrenzungswände (Sicherungsring 14) der Ringnut lösbar am Kolben (7) angeordnet ist, dadurch gekennzeichnet, dass der Kolben (7) einseitig einen bolzenartigen Ansatz (13) trägt, auf welchen der Reibring (15) mit dem Kolben (7) zu- oder abgewandter, an ihm befindlicher Innenringnut (16) aufschiebbar und durch einen mit dem Ansatz (13) lösbar verbindbaren Sicherungsring (14) haltbar ist.

3. Nachstellvorrichtung nach Anspruch 1 oder 2, dadurch gekennzeichnet, dass der Reibring (15) mit einem Wandungsabschnitt (6) des Zylindergehäuses (1) zusammenwirkt, der im ganzen Nachstellbereich axial und/oder radial zum der hydraulikdichten Führung des Kolbens (7) dienenden Wandungsabschnitt (2) versetzt angeordnet ist.

4. Nachstellvorrichtung nach einem oder mehreren der Ansprüche 1 bis 3, wobei der Reibring federnd gegen eine der beiden Begrenzungswände der Ringnut abgestützt ist, dadurch gekennzeichnet, dass der Zwischenring (17) eine sich über sein Axialspiel in der Ringnut erstreckende Feder (18) aufweist.

5. Nachstellvorrichtung nach Anspruch 4, dadurch gekennzeichnet, dass sich beidseitig des Zwischenringes (17) je eine Tellerfeder (18) befindet.

6. Nachstellvorrichtung nach Anspruch 5, dadurch gekennzeichnet, dass die Tellerfedern (18) mit dem Zwischenring (17) zu einer Baueinheit verbunden sind.

7. Nachstellvorrichtung nach einem oder mehreren der vorstehenden Ansprüche, dadurch gekennzeichnet, dass zum Einstellen des Sollhubes Zwischenringe (17, 17') unterschiedlicher, axialer Breite in die Innenringnut (16) einsetzbar sind.

## Claims

1. Automatic, continuously acting adjuster for hydraulic brake cylinders in vehicle brakes designed in particular as disc brakes, comprising a piston (7) which is moveable in a cylinder body (1) and which has in the hydraulic chamber an annular groove open towards the cylinder body (1), which annular groove contains a friction ring (15) which can move axially in the said annular groove, at least approximately free from frictional engagement by a desired stroke and in frictional engagement in a range of adjustment relative to the cylinder body (1), wherein a spacing ring (17, 17'), which can move axially in a manner at least approximately free from frictional engagement, is located between the friction ring (15) and one of the two axial limiting walls (shoulder 12 and retaining ring 14) of the annular groove, which spacing ring has a certain end play corresponding to the desired stroke when the friction ring (15) contacts the annular groove wall (shoulder 12 or retaining ring 14) facing away from the said spacing ring (17, 17'), and wherein the spacing ring (17, 17') is located in an inner annular groove (16) of the friction ring (15), which inner annular groove is open radially inwards and towards one of the end faces of the friction ring (15) and whose diameter is greater than the outside diameter of the limiting walls (shoulder 12 and retaining ring 14) of the annular groove.

2. Adjuster as defined in Claim 1, one of the axial limiting walls (retaining ring 14) of the annular groove being located detachably on the piston (7), wherein the piston (7) bears at one side a stud-like projection (13) onto which the friction ring (15), with the inner annular groove (16) on it facing towards or away from the piston (7), can be pushed and on which the said friction ring can be held by a retaining ring (14) which can be detachably joined to the projection (13).

3. Adjuster as defined in Claim 1 or 2, wherein the friction ring (15) interacts with a wall section (6) of the cylinder body (1), which wall section (6) is offset in the whole range of adjustment axially and/or radially from the wall section (2) serving as a hydraulic-proof guide for the piston (7).

4. Adjuster as defined in one or more of Claims 1 to 3, the friction ring being supported resiliently by one of the two limiting walls of the annular groove, wherein the spacing ring (17) has a spring (18) extending by the amount of its end play in the annular groove.

5. Adjuster as defined in Claim 4, wherein there is a Belleville spring (18) at either side of the spacing ring (17).

6. Adjuster as defined in Claim 5, wherein the Belleville springs (18) are joined in one constructional unit with the spacing ring (17).

7. Adjuster as defined in one or more of the preceding Claims, wherein spacing rings (17, 17') of different axial width can be inserted into the inner annular groove (16) for the purpose of adjusting the desired stroke.

## Revendications

1. Dispositif automatique de rattrapage de jeu à action continue pour des cylindres de freins hydrauliques, en particulier de freins de véhicules réalisés sous la forme de freins à disques, comportant un piston (7) mobile dans le carter de cylindre (1) et présentant dans la chambre hydraulique une gorge annulaire ouverte vers le carter de cylindre (1) et dans laquelle est logée une bague de friction (15) qui est déplaçable axialement dans la gorge annulaire au moins approximativement sans friction, sur une course de consigne et, par rapport au carter de cylindre, et avec friction, dans une plage de rattrapage de jeu, caractérisé par le fait qu'entre la bague de friction (15) et l'une des deux parois axiales de limitation (épaulement 12 et circlip 14) de la gorge annulaire, est disposée une bague intermédiaire (17, 17') qui est pour le moins approximativement mobile axialement et sans friction, laquelle bague intermédiaire (17, 17') présente, lorsque la bague de friction (15) porte contre la paroi de limitation (épaulement 12, circlip 14) de la gorge annulaire, qui est éloignée de la bague intermédiaire (17, 17'), un jeu axial qui correspond à la course de consigne, et que la bague intermédiaire (17, 17') se situe dans une gorge annulaire intérieure (16) de la bague de friction (15), ladite gorge annulaire intérieure étant ouverte vers l'un des côtés de la bague de friction (15) et dans le sens radialement intérieur, et son diamètre étant supérieur au diamètre extérieur des parois de limitation (épaulement 12, circlip 14) de la gorge annulaire.

2. Dispositif de rattrapage de jeu selon la revendication 1, du type dans lequel l'une des parois axiales de limitation (circlip 14) de la gorge annulaire est montée de façon détachable sur le piston (7), caractérisé par le fait que le piston (7) est pourvu, sur un côté, d'un appendice (13) en forme de boulon, appendice sur lequel la bague de friction (15), avec le piston (7), est susceptible d'être montée en position proche ou éloignée de la gorge annulaire intérieure (16) qui y est prévue, et est susceptible d'être maintenue à l'aide d'un circlip (14) pouvant être relié, de façon détachable, avec l'appendice (13).

3. Dispositif de rattrapage de jeu selon la revendication 1 ou 2, caractérisé par le fait que la bague de friction (15) coagit avec une section de paroi (6) du carter de cylindre (1), qui est décalée dans toute la plage de réglage, axialement et/ou radialement par rapport à la section de paroi (2) qui sert au guidage hydrauliquement étanche du piston (7).

4. Dispositif de rattrapage de jeu selon l'une ou plusieurs des revendications 1 à 3, dans lequel la bague de friction s'appuie élastiquement contre l'une des deux parois de limitation de la gorge annulaire, caractérisé par le fait que la bague intermédiaire (17) comporte un ressort (18) qui s'étend dans la gorge annulaire le long de son jeu axial.

5. Dispositif de rattrapage de jeu selon la revendication, 4, caractérisé par le fait que des plateaux de ressorts (18) sont prévus respectivement de part et d'autre de la bague intermédiaire (17).

6. Dispositif de rattrapage de jeu selon la revendication 5, caractérisé par le fait que les plateaux de ressorts (18) sont reliés à la bague intermédiaire (17) pour ne constituer qu'un seul et même élément de construction.

7. Dispositif de rattrapage de jeu selon une ou plusieurs des revendications précédentes, caractérisé par le fait que pour le réglage de la course de consigne, des bagues intermédiaires (17, 17') de largeur axiale différente, sont susceptibles d'être insérées dans la gorge annulaire intérieure (16).

# Fig. 1

# Fig. 2

# Fig.3